# EUROPÄISCHE PATENTSCHRIFT

(11) **EP 2 042 040 B1**
(45) Veröffentlichungstag und Bekanntmachung des Hinweises auf die Patenterteilung: **09.06.2010**
(21) Anmeldenummer: 07023809.2
(22) Anmeldetag: 08.12.2007
(51) Int. Cl.: A22B 7/00

(54) **Verarbeitung von Schweine- und Schafsdarmpaketen**
Processing of pig and sheep intestines
Transformation de paquets d'intestins de porcs et de moutons

(30) Priorität: 25.09.2007 DE 102007045822
(43) Veröffentlichungstag der Anmeldung: 01.04.2009
(73) Patentinhaber: Firma Holdijk & Haamberg GmbH, 48599 Gronau (DE)
(72) Erfinder: Holdijk, Arman, 7547 RZ Enschede (NL)
(74) Vertreter: Habbel, Ludwig

(56) Entgegenhaltungen:
- EP-A- 1 188 381
- EP-A- 1 374 687
- WO-A-2005/036973
- DE-B- 1 001 915
- US-B1- 6 364 758

## Beschreibung

Die Erfindung betrifft eine Vorrichtung zur Verarbeitung von Darmpaketen geschlachteter Tiere.

Aus der Praxis ist es bekannt, dass in Schlachthöfen die Verarbeitung der Innereien eines geschlachteten Tieres an ein separates Unternehmen abgegeben wird, welches räumlich nah am Schlachthof untergebracht ist, beispielsweise auf dem Gelände des Schlachthofes selbst untergebracht ist. Wenn ein geschlachtetes Tier geöffnet wird und das Darmpaket fällt, kann das Darmpaket auf einer Rutsche vom Schlachthof in das angrenzende Betriebsgelände der so genannten Kuttelei übergeben werden. Es gelangt dort zu einer Annahmestation. In der Annahmestation werden die Darmpakete auf eine Transportvorrichtung gegeben, nämlich auf ein Transportband, einen Tisch mit angetriebenen Rollen oder dergleichen und die Darmpakete werden vereinzelt, so dass sie voneinander beabstandet über die Transportvorrichtung von einem zum nächsten Arbeitsplatz gefördert werden. An den einzelnen Arbeitsstationen werden die unterschiedlichen Bestandteile des Darmpakets voneinander getrennt, beispielsweise die Milz, das Netzgewebe oder der Fettdarm. Dabei ist es üblich, dass das Personal an diesen Arbeitsstationen im Stehen arbeitet, so dass die Transportvorrichtung beispielsweise etwa hüfthoch angeordnet ist, um ein möglichst bequemes und ermüdungsarmes Arbeiten an den einzelnen Arbeitsstationen zu ermöglichen.

Eine derartige Verarbeitung von Darmpaketen erfolgt insbesondere bei größerem Schlachtvieh, wie beispielsweise Schweinen, Schafen oder Rindern. Dabei ist vorgeschrieben, dass Verschmutzungen am Darm aus hygienischen Gründen unzulässig sind und dazu führen müssen, das entsprechende Darmpaket komplett zu entsorgen und nicht zu verwerten. Wenn also beim Abtrennen bestimmter Bestandteile aus dem Darmpaket versehentlich ein Stich oder Schnitt in den Darm eindringt und die Darmwand verletzt, so dass Kot oder anderer Darminhalt aus dem Darm austreten kann, ist dieses betroffene Darmpaket komplett zu verwerfen. Erfolgt dies entgegen den Vorschriften nicht, so besteht ein hygienisches Problem. Wird den Vorschriften entsprechend gehandelt und das betroffene Darmpaket verworfen, so entsteht ein wirtschaftlicher Schaden.

Aber auch wenn den Vorschriften entsprechend gehandelt und das entsprechende Darmpaket entsorgt wird, bleibt die Transportvorrichtung verschmutzt, so dass nachfolgende Darmpakete, die mit denselben, verschmutzten Stellen der Transportvorrichtung in Kontakt kommen, ebenfalls verschmutzt werden. Eine derartige Verschmutzung erfolgt sowohl wenn die Transportvorrichtung angetriebene Rollen aufweist, über welche die Darmpakete transportiert werden, oder wenn ein bewegliches Transportband vorgesehen ist, oder wenn die Transportvorrichtung einen Arbeitstisch oder nicht angetriebene Rollen aufweist und die Darmpakete an einer Hänge-Fördervorrichtung über die Arbeitstische geführt werden. Eine derartige Hänge-Transportvorrichtung kann beispielsweise so ausgestaltet sein, dass sie Mitnehmer aufweist, welche oberhalb der Arbeitstische geführt werden. An der Annahmestation, wo die Darmpakete aus dem Schlachtbetrieb ankommen, werden die Darmpakete in diese Mitnahmevorrichtung eingehängt und anschließend über die Arbeitstische gezogen. Bei einer Verschmutzung eines Darmpaketes ist nicht auszuschließen, dass der Arbeitstisch an der betreffenden Stelle und in nachfolgenden Bereichen von Material verschmutzt wird, welches aus dem betroffenen Darmpaket herabläuft oder herabtropft, so dass in hygienisch nachteiliger Weise auch nachfolgende Darmpakete durch die verschmutzten Bereiche des Arbeitstisches gezogen werden.

Aus der WO 2005/036973 A1 ist eine gattungsgemäße Vorrichtung bekannt. Sie dient zum Transport von Geflügel-Innereien. Ein schalenartiger Halter ist vorgesehen, der aus zwei Hälften geformt ist, die in der Draufsicht gebogen verlaufen und eine Öffnung zwischen sich freilassen. Die beiden Hälften können zur Aufnahme der Geflügel-Innereien auseinander bewegt werden und anschließend zueinander bewegt werden, um die erwähnte Schale zu bilden. Während einige Innereien wie das Herz, die Leber und der Kropf auf den beiden die Schale formenden Teilen des Halters liegen, hängen die Gedärme frei durch die Öffnung herab. Sollte der Darm verletzt worden sein, so ist eine Verschmutzung der können die beiden die Schale formenden Teilen des Halters verschmutzt werden, so dass die dort aufliegenden Anteile der Innereien ebenfalls verschmutzen können.

Auch die EP 1 374 687 A1 zeigt eine Vorrichtung, mittels welcher innere Organe geschlachteter Tiere frei hängend zu verschiedenen Arbeitsstationen transportiert werden. Dabei liegen die Organe bei einigen Arbeitsstationen auf Führungselementen auf. Allerdings ist nicht vorgesehen, dass die zu transportierenden Organe auch den Darm umfassen, so dass sich die eingangs geschilderte Problematik nicht ergibt, da es nicht zu Verschmutzungen verwertbarer Organe mit Darminhalt kommen kann.

Der Erfindung liegt die Aufgabe zugrunde, eine gattungsgemäße Vorrichtung dahingehend zu verbessern, dass eine möglichst wirtschaftliche und hygienische Verarbeitung von Schweine- und Schafsdarmpaketen ermöglicht wird.

Die Erfindung wird durch eine Vorrichtung mit den Merkmalen des Anspruchs 1 gelöst.

Die Erfindung schlägt mit anderen Worten vor, nicht Geflügelinnereien zu transportieren, wie aus den eingangs erwähnten Druckschriften bekannt, sondern Schweine- und Schafsdarmpakete. Diese werden vorschlagsgemäß frei hängend transportiert, also nicht lediglich durch eine Hänge-Transportvorrichtung in Art eines Mitnehmers über eine Arbeitsfläche gezogen, sondern frei hängend in dieser Transportvorrichtung aufgehängt.

Überraschend ist im Unterschied zu den erheblich kleineren und leichteren Innereien von Geflügel, dass sich die deutlich größeren und schwereren Schweine- und Schafsdarmpakete beschädigungsfrei hängend transportieren lassen, wobei aus der Praxis bekannt ist, dass schwere Darmpakete, nämlich Rinderdarmpaket, im Gegensatz zu dem vorliegenden Vorschlag mittels einer Hänge-Transportvorrichtung in Art eines Mitnehmers über eine Arbeitsfläche gezogen werden. Die Aufhängearme einer vorschlagsgemäßen Vorrichtung sind daher anders als von den für Geflügel vorgesehenen Vorrichtungen bekannt, mit solchen Abmessungen ausgestaltet, dass sie für den frei hängenden Transport von Schweine- und Schafsdarmpaketen geeignet sind.

Die vorschlagsgemäß bei den Schweine- und Schafsdarmpaketen angewendete "frei hängende" Transportart ergibt erhebliche Vorteile gegenüber der praxisüblichen, für sowohl Rinder als auch Schweine und Schafe angewandten "ziehenden" Transportart: Sollte ein Darmpaket während der Verarbeitung verschmutzen, so tropft der Schmutz auf den Boden bzw. in eine dort vorgesehene Rinne. Da sämtliche Schweine- und Schafsdarmpakete vorschlagsgemäß frei hängend transportiert werden, berühren nachfolgende transportierte Darmpakete den Boden bzw. die Rinne nicht. Die Verschmutzung bleibt somit ausschließlich auf das jeweils betroffene Schweine- und Schafsdarmpaket begrenzt, so dass der wirtschaftliche Schaden minimiert wird und hygienische Missstände für nicht betroffene Darmpakete ausgeschlossen sind.

Vorschlagsgemäß ist vorgesehen, einen zuverlässigen Halt des Schweine- und Schafsdarmpakets auf dem Aufhängearm sicherzustellen, indem ein Sicherungselement vorgesehen ist, welches das Schweine- und Schafsdarmpaket auf dem Aufhängearm sichert. Der vorliegende Vorschlag geht dabei von der Überlegung aus, dass eine Verletzung des Darms unbedingt zu vermeiden ist, so dass beispielsweise ein Haken oder ein Spieß, auf den das Darmpaket aufgespießt werden könnte, zur sicheren Festlegung des Schweine- und Schafsdarmpakets zwar rein funktional geeignet wäre, aus hygienischen Gründen aber ausscheidet, so dass statt einer derartigen Ausgestaltung des Aufhängearmes vorschlagsgemäß ein zusätzliches Sicherungselement vorgesehen ist. Vorschlagsgemäß ist das dabei verwendete Sicherungselement als Bügel ausgestaltet, der schwenkbeweglich gelagert ist.

Eine leichte Bedienbarkeit der Vorrichtung wird dadurch erleichtert, dass dieser Bügel am freien Ende des Aufhängearms gelöst werden kann und anschließend das Sicherungselement in seine Offenstellung aufgeschwenkt wird. Das freie Ende des Aufhängearms ist nun problemlos zugänglich, um ein Schweine- und Schafsdarmpaket auf den Aufhängearm aufzuhängen, anschließend wird der Bügel heruntergeklappt. Geht man davon aus, dass der Aufhängearm mit seinem freien Ende an der Annahmestation zum Personal ausgerichtet ist, so ist ein problemloses Aufschieben des Schweinedarmpaktes auf den Aufhängearm möglich und anschließend, wenn der Sicherungsbügel in seine Riegelstellung heruntergeschwenkt ist, ist die Verriegelung ebenfalls optimal zugänglich, da das Sicherungselement vorteilhaft am freien Ende des Aufhängearms verriegelbar ist.

Vorschlagsgemäß werden Schweine- und Schafsdarmpakete frei hängend transportiert. Das Gewicht eines Schweine- und Schafsdarmpaketes ermöglicht es, dieses auf einen Aufhängearm zu hängen, was angesichts der Größe, der Darmlänge und des Gesamtgewichtes eines Rinderdarmpaketes bei Rinderdarmpaketen mit erheblichen Schwierigkeiten verbunden wäre, während es bei Schweine- und Schafsdarmpaketen jedoch im Bereich der Annahmestation problemlos möglich ist, diese Darmpakte in die Transportvorrichtung zu hängen.

Anschließend werden die frei hängenden Schweine- und Schafsdarmpakete auf einer Arbeitshöhe transportiert, die für die stehende Arbeit an den Schweine- und Schafsdarmpaketen gut geeignet ist, beispielsweise in einer Höhe zwischen Hüfthöhe und Brusthöhe des Personals. Je nachdem, an welchem Teil des Darmpaketes gearbeitet werden soll, kann die Höhe des Schweine- und Schafsdarmpaketes durch entsprechende Führung der Transportvorrichtung höher oder tiefer verlaufen, so dass der für die jeweilige Arbeitsstation vorgesehene Arbeitsbereich in einer optimalen Höhe vorgesehen ist, die ein möglichst ermüdungsfreies Arbeiten ermöglicht und Zwangshaltungen des Personals ausschließt. Daher können die Schweine- und Schafsdarmpakete in einer Höhe zwischen 1 m und 1,80m transportiert werden.

Falls es je nach technischer Ausgestaltung der Transportvorrichtung aufwendig sein sollte, dass die Transportvorrichtung in unterschiedlichen Höhen verläuft, können unterschiedliche Arbeitshöhen bei gleich bleibendem Abstand der Transportvorrichtung vom Boden einfach durch Podeste ermöglicht werden, auf denen das Personal an der jeweiligen Arbeitsstation in der jeweils gewünschten vorteilhaften Höhe steht. Auf diese Weise kann zuverlässig sichergestellt werden, dass die Schweine- und Schafsdarmpakete ohne Bodenkontakt ausreichend hoch transportiert werden, und dass dennoch ein möglichst ermüdungsfreies Arbeiten ermöglicht wird. Zudem können die Podeste auswechselbar sein, so dass an die Körpergröße jeder Person die Podesthöhe angepasst werden kann.

Eine vorschlagsgemäß vorgesehene Vorrichtung, die das vorschlagsgemäße Verfahren ermöglicht, sieht eine im Abstand über dem Boden verlaufende Transportbahn vor. In Transportrichtung sind mehrere Aufhängearme vorgesehen, die jeweils voneinander beabstandet sind, um einerseits einen Kontakt benachbarter Schweine- und Schafsdarmpakete auszuschließen und andererseits an den einzelnen Arbeitsstationen ausreichend Zeit zur Bearbeitung zu geben, wenn die Transportvorrichtung kontinuierlich durchläuft. Diese mehreren Aufhängearme sind so groß bemessen, dass sie das komplette Schweine- und Schafsdarmpaket aufnehmen können, so dass einerseits ihre Tragkraft danach bemessen sein muss und andererseits die Abmessungen des Aufnahmearmes entsprechend groß gewählt sein müssen, dass nicht nur ein Anteil des Schweine- und Schafsdarmpakets, wie beispielsweise der Fettdarm, aufgehängt werden kann, sondern das komplette Schweine- und Schafsdarmpaket.

Das Sicherungselement kann als flexibler Gurt oder Gummizug oder dergleichen ausgestaltet sein. Eine besonders haltbare und hygienisch gut zu reinigende Ausgestaltung ergibt sich, wenn das Sicherungselement aus Metall oder aus Kunststoff gefertigt werden kann und als starres, aber bewegliches Element ausgestaltet ist, welches zwischen einer Offenstellung und einer Riegelstellung beweglich ist. In der Riegelstellung befindet sich das Sicherungselement nahe am Aufhängearm, so dass zwischen dem Sicherungselement und dem Aufhängearm ein Freiraum verbleibt. Auf diese Weise ist eine Schneidwirkung ausgeschlossen, die beim Schließen des Sicherungselementes, nämlich bei dessen Überführung aus der Offenstellung in die Riegelstellung ansonsten zu einer Verletzung des Schweine- und Schafsdarmpaketes führen könnte.

Vorteilhaft kann ein zuverlässiger Halt des Schweine- und Schafsdarmpakets am Aufhängearm dadurch ermöglicht werden, dass dort, wo das Schweine- und Schafsdarmpaket am Aufhängearm festgelegt ist, eine mehrfache Richtungsumlenkung für das Schweine- und Schafsdarmpaket vorgesehen ist.

Dies kann vorteilhaft dadurch erzielt werden, dass der Aufhängearm zwei benachbarte und voneinander beabstandete Leisten aufweist, die beispielsweise parallel zueinander verlaufen und dass sich das Sicherungselement zwischen diesen beiden Leisten erstreckt, wenn es sich in seiner Riegelstellung befindet.

Während der Aufhängearm grundsätzlich so ausgestaltet ist, dass er das Schweine- und Schafsdarmpaket bewusst nicht verletzt, kann am Aufhängearm ein Haken vorgesehen sein, der bewusst mit einer Spitze versehen ist. Dieser Haken ist im Abstand von dem Abschnitt des Aufhängearmes angeordnet, auf den das Schweine- und Schafsdarmpaket aufgehängt wird. Der spitze Haken dient dazu, den Fettdarm aufhängen zu können und da der Fettdarm problemlos perforiert werden kann, ohne hygienische Probleme zu verursachen, ermöglicht die mit einer Spitze versehene Ausgestaltung des betreffenden Hakens eine schnelle und problemlose Handhabung der Vorrichtung zum Aufhängen des Fettdarms, ohne dass ein zusätzliches Element, wie beispielsweise ein Sicherungselement, betätigt werden müsste.

Das vorgeschlagene Verfahren sowie ein Ausführungsbeispiel einer vorschlagsgemäßen Vorrichtung werden anhand der rein schematischen Darstellungen nachfolgend näher erläutert. Dabei zeigt
- Fig. 1: in perspektivischer Ansicht eine Transportvorrichtung in stark vereinfachter Darstellung,
- Fig. 2: in gegenüber Fig. 1 vergrößertem Maßstab Aufhängearme an der Transportvorrichtung.

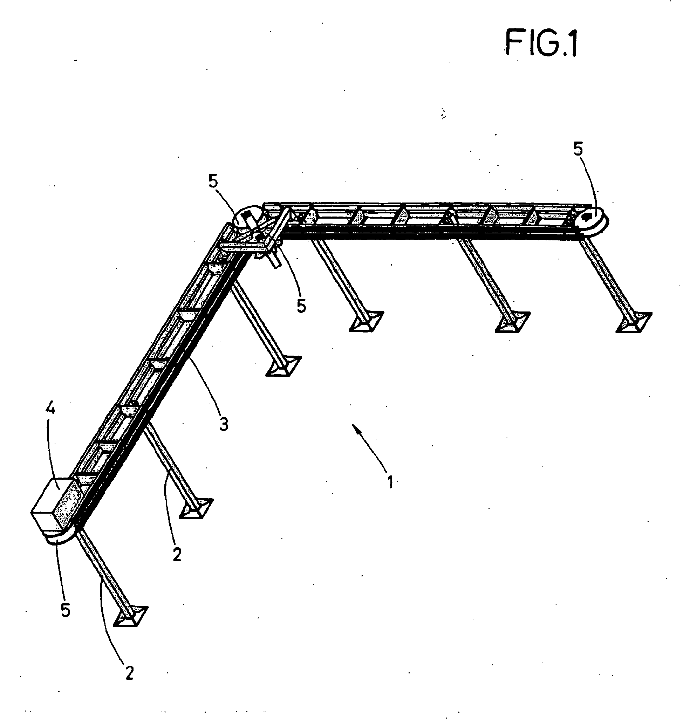

Aus Fig. 1 ist eine Transportvorrichtung 1 ersichtlich, die eine mittels mehrerer Stützen 2 erhöht über dem Boden verlaufende Förderkette 3 aufweist. Die Förderkette 3 ist von einem eingehausten Motor 4 angetrieben und um vier Umlenkrollen 5 umgelenkt, so dass sie einen insgesamt L-förmigen Verlauf nimmt und im geschlossenen Kreislauf umlaufend angetrieben ist.

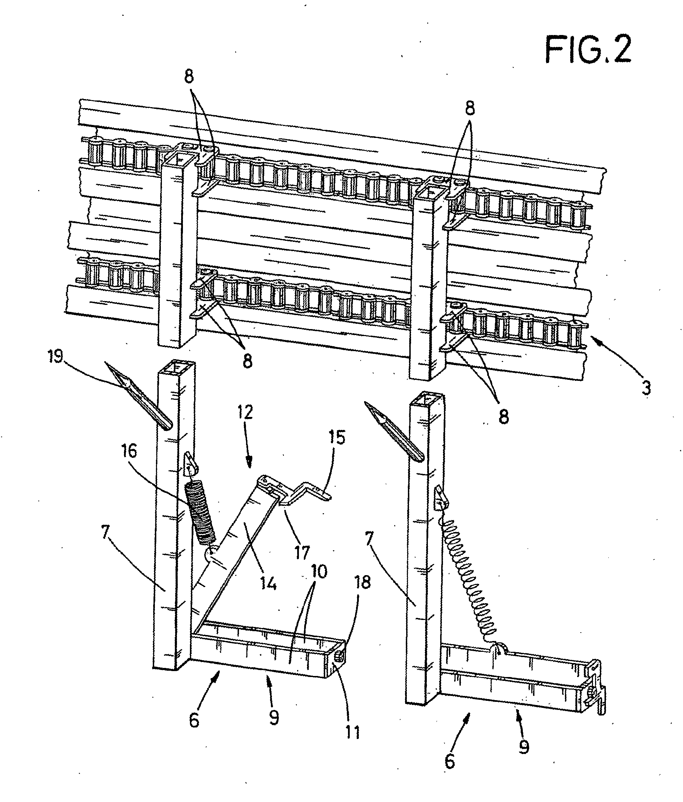

Wie Fig. 2 genauer erkennen lässt, ist die Förderkette 3 als Doppelkette mit zwei Kettentrums ausgestaltet und diese Förderkette 3 trägt eine Vielzahl von Aufhängearmen 6. Jeder Aufhängearm weist einen aufrechten Schenkel 7 auf, der mittels Laschen 8 an den beiden Trums der doppelten Förderkette 3 befestigt ist. Rein beispielhaft sind zwei Aufhängearme 6 in Fig. 2 dargestellt, wobei der Abstand, den die beiden Aufhängearme 6 in der Zeichnung zueinander aufweisen, rein beispielhaft gewählt ist und nicht den tatsächlichen Verhältnissen entsprechen muss. Jeder Aufhängearm 6 weist einen unteren, liegend verlaufenden Halteschenkel 9 auf, auf den ein Schweine- und Schafsdarmpaket aufgehängt werden kann. Ein Halteschenkel 9 besteht dabei aus zwei parallel zueinander verlaufenden Leisten 10, die am vorderen freien Ende des Halteschenkels 9 durch ein Stirnblech 11 miteinander verbunden sind.

Zwischen den Leisten 10 ist ein Sicherungselement 12 schwenkbar gelagert. Das Sicherungselement 12 ist als Bügel 14 ausgestaltet, der an seinem vorderen freien Ende, gegenüber dem Schwenklager, einen Riegelhaken 15 aufweist.

Fig. 2 zeigt zwei benachbarte Aufhängearme 6 in unterschiedlichen Riegelstellungen: Bei dem links dargestellten Aufhängearm 6 befindet sich das Sicherungselement 12 in seiner Offenstellung, in die es durch eine Zugfeder 16 automatisch gebracht wird.

Bei dem in Fig. 2 rechts dargestellten Aufhängearm 6 befindet sich das Sicherungselement 12 in seiner Riegelstellung. Dabei ist gegenüber der Offenstellung der Bügel 14 gegen die Wirkung der Zugfeder 16 nach unten verschwenkt worden, so dass der Bügel 14 zwischen die beiden Leisten 10 des Halteschenkels 9 eintaucht. Der Riegelhaken 15 gelangt mit einer Führungsschräge 17 gegen einen Anschlag 18 am Stirnblech 11, wird beim weiteren Absenken des Bügels 14 dadurch automatisch ausgelenkt, und hintergreift schließlich diesen Anschlag 18, so dass der Bügel 14 in der Riegelstellung gesichert ist. Für ein auf den Halteschenkel 9 aufgeschobenes Schweine- und Schafsdarmpaket ergibt sich daher ein mehrfach umgelenkter Verlauf über die beiden Leisten 10 und unter dem Bügel 14 her, so dass das Schweine- und Schafsdarmpaket rutschsicher auf dem Aufhängearm 6 fixiert ist. Ein Bodenkontakt des Schweine- und Schafsdarmpaketes oder einzelner Teile davon ist daher ausgeschlossen, so dass eine hygienisch einwandfreie Handhabung des Schweinedarmpaktes während der Verarbeitung an der Transportvorrichtung 1 sichergestellt ist.

Am aufrechten Schenkel 7 des Aufhängearms 6 ist oberhalb des Halteschenkels 9 ein an seinem freien Ende angespitzter Haken 19 vorgesehen, der dazu dient, einen Fettdarm des Schweine-und Schafsdarmpaketes aufzunehmen und zu halten.

Aufgrund der Aufständerung der Förderkette 3 werden die Schweine- und Schafsdarmpakete frei hängend, also ohne den Boden zu berühren, mittels der Transportvorrichtung 1 transportiert. Dabei ist die Höhe der Stützen 2 derart bemessen, dass bei stehender Arbeitsweise die Schweine- und Schafsdarmpakete in einer optimalen, ergonomischen, möglichst ermüdungsarmen Arbeitshöhe bearbeitet und verarbeitet werden können, so dass im Vergleich zu aus der Praxis bekannten Verarbeitungsanlagen keine aufliegende Verarbeitung der Schweine- und Schafsdarmpakete erfolgen muss sondern, indem nämlich keine Arbeitstische unterhalb der Transportvorrichtung 1 vorgesehen sind, eine Verarbeitung der frei hängenden Schweine- und Schafsdarmpakete erfolgen kann. Verschmutzungen, die durch Beschädigungen der Schweine- und Schafsdarmpakete auftreten, betreffen nur das jeweilige Schweine- und Schafsdarmpaket selbst bzw. können ggf. auf den Boden bzw. in eine dort vorgesehene Rinne gelangen, ein Kontakt mit nachfolgenden, auf der Transportvorrichtung 1 beförderten Schweine- und Schafsdarmpaketen, ist dabei hygienisch vorteilhaft ausgeschlossen.

## Patentansprüche

1. Vorrichtung zum Verarbeiten von Darmpaketen von Schlachttieren,
wobei eine im Abstand über dem Boden verlaufende Transportvorrichtung (1) vorgesehen ist, mittels welcher die Darmpakete frei hängend zu mehreren Arbeitsstationen gefördert werden,
und an welcher eine Vielzahl von in Transportrichtung hintereinander angeordneten Aufhängearmen (6) vorgesehen ist,
welche jeweils ein Sicherungselement (12) aufweisen, welches das Darmpaket auf dem Aufhängearm (6) sichert,
**dadurch gekennzeichnet,**
**dass** die Aufhängearme (6) jeweils zur Aufnahme eines Schweine- und Schafsdarmpakets bemessen sind,
und das Sicherungselement (12) als Bügel (14) ausgestaltet ist, welcher schwenkbeweglich gelagert ist und in seiner Sicherungsstellung am Aufhängearm (6) verriegelbar ist.

2. Vorrichtung nach Anspruch 1,
**dadurch gekennzeichnet,**
**dass** das Sicherungselement (12) aus einer Offenstellung in eine Riegelstellung beweglich ist, in welcher das Sicherungselement (12) nahe dem Aufhängearm (6) verläuft, derart, dass zwischen dem Aufhängearm (6) und dem
Sicherungselement (12) ein Freiraum verbleibt.

3. Vorrichtung nach Anspruch 1 oder 2,
**dadurch gekennzeichnet,**
**dass** der Aufhängearm (6) zwei benachbarte und voneinander beabstandet verlaufende Leisten (10) aufweist, wobei sich das Sicherungselement (12) in seiner Riegelstellung zwischen den beiden Leisten (10) erstreckt, derart, dass ein auf den Aufhängearm (6) aufgehängtes Schweine- und Schafsdarmpaket unter mehrfacher Richtungsänderung zwischen dem Aufhängearm (6) und dem Sicherungselement (12) gehalten ist.

4. Vorrichtung nach einem der vorhergehenden Ansprüche,
**dadurch gekennzeichnet,**
**dass** am Aufhängearm (6) ein mit einer Spitze versehener Haken (19) vorgesehen ist, wobei dieser Haken (19) im Abstand von dem Abschnitt des Aufhängearms (6) angeordnet ist, der zur Aufnahme des Schweine- oder Schafsdarmpakets dient.

5. Vorrichtung nach einem der vorhergehenden Ansprüche,
**dadurch gekennzeichnet,**
**dass** der Abstand, in welchem die Transportvorrichtung (1) über dem Boden verläuft, derart bemessen ist, dass die Schweine- und Schafsdarmpakete in einer Höhe zwischen 1 m und 1,80m transportiert werden.

## Claims

1. Means of processing packs of slaughtered animals' intestines, which processing means incorporates a transport means (1) running above the ground, by which transport means (1) the packs of intestines are transported freely hanging to a number of work stations,and which transport means (1) incorporates a large number of suspension arms (6) disposed one after the other in the direction of transport, each of which suspension arms (6) incorporates a locking element (12), which locking element (12) holds the pack of intestines securely on the suspension arm (6), **characterised in that** each of the suspension arms (6) is designed to receive a pack of pig's and sheep's intestines and the locking element (12) is designed as a bar (14) and mounted so that it can be swung in and out and locked in its locking position on the suspension arm (6).

2. Processing means in accordance with claim 1, **characterised in that** the locking element (12) can be moved out of an open position into a locking position, in which locking position the locking element (12) runs close to the suspension arm (6) so that a free space is left between the suspension arm (6) and the locking element (12).

3. Processing means in accordance with claim 1 or 2, **characterised in that** the suspension arm (6) incorporates two bars (10) which are set one beside the other and a distance apart, on which processing means the locking element (12), when in its locked position, extends between the two bars (10) so that a pack of pig's and sheep's intestines suspended on the suspension arm (6) is held between the suspension arm (6) and the locking element (12) throughout repeated changes of direction.

4. Processing means in accordance with any one of the foregoing claims, **characterised in that** the suspension arm (6) incorporates a hook (19) having a point, on which processing means this hook (19) is disposed at a distance from the portion of the suspension arm (6) which is used to receive the pack of pig's or sheep's intestines.

5. Processing means in accordance with any one of the foregoing claims, **characterised in that** the distance at which the transport means (1) runs above the ground is set so that the packs of pig's and sheep's intestines can be transported at a height of between 1 metre and 1.80 metres.

## Revendications

1. Dispositif servant à transformer des paquets d'intestins d'animaux de boucherie, sachant qu'est prévu un dispositif de transport (1) circulant à une certaine distance au dessus du sol, dispositif au moyen duquel les paquets d'intestins sont convoyés en suspension libre jusqu'à plusieurs stations de travail,et dispositif sur lequel est prévu un grand nombre de bras d'accrochage (6) agencés les uns derrière les autres dans le sens du transport, lesquels bras présentent un élément de sécurisation (12) sécurisant le paquet d'intestins présent sur le bras d'accrochage (6), **caractérisé en ce que** les bras de suspension (6) sont dimensionnés chacun pour recevoir un paquet d'intestins de porc et de mouton, et **en ce que** l'élément de sécurisation (12) est configuré en étrier (14) sur palier permettant à l'étrier de pivoter, et qu'il est verrouillable contre le bras d'accrochage (6) lorsqu'il se trouve en position de sécurisation.

2. Dispositif selon la revendication 1, **caractérisé en ce que** l'élément de sécurisation (12) peut se déplacer de sa position ouverte vers sa position verrouillée dans laquelle l'élément de sécurisation (12) présente un tracé proche du bras d'accrochage (6), de sorte qu'il reste un espace libre entre le bras d'accrochage (6) et l'élément de sécurisation (12).

3. Dispositif selon la revendication 1 ou 2, **caractérisé en ce que** le bras d'accrochage (6) présente deux bandeaux (10) voisins situés à une certaine distance l'un de l'autre, sachant que l'élément de sécurisation (12) s'étend dans sa position de verrou entre les deux bandeaux (10), de sorte qu'un paquet d'intestins de porc et de mouton accroché sur le bras d'accrochage (6) est retenu,

4. tout en changeant plusieurs fois de direction, entre le bras de d'accrochage (6) et l'élément de sécurisation (12). Dispositif selon l'une des revendications précédentes, **caractérisé en ce que** sur le bras d'accrochage (6) est prévu un crochet (19) équipé d'une pointe, sachant que ce crochet (19) est agencé à une certaine distance du segment du bras d'accrochage (6) servant à recevoir le paquet d'intestin de porc ou de mouton.

5. Dispositif selon l'une des revendications précédentes, **caractérisé en ce que** l'écart selon lequel le dispositif de transport (1) circule au dessus du sol a été dimensionné de telle sorte que les paquets d'intestins de porc et de mouton sont transportés à une hauteur comprise entre 1 m et 1,80 m.
